# EUROPÄISCHE PATENTSCHRIFT

(11) **EP 1 018 452 B1**
(45) Veröffentlichungstag und Bekanntmachung des Hinweises auf die Patenterteilung: **02.05.2003**
(21) Anmeldenummer: 99100070.4
(22) Anmeldetag: 05.01.1999
(51) Int. Cl.: B60P 1/44

(54) **Ladebordwand**
Loading platform
Hayon élévateur

(43) Veröffentlichungstag der Anmeldung: 12.07.2000
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Herman Jens, 6990 Ulfborg (DK)
(74) Vertreter: Niedmers, Ole, Dipl.-Phys.

(56) Entgegenhaltungen:
- EP-A- 0 081 115
- EP-A- 0 273 865
- EP-A- 0 371 454
- WO-A-97/09197
- BE-A- 1 006 514
- DE-A- 19 632 725
- DE-C- 3 537 938
- FR-A- 2 690 882
- PATENT ABSTRACTS OF JAPAN vol. 097, no. 011, 28. November 1997 & JP 09 188183 A (MITSUBISHI ALUM CO LTD;PABUKO:KK), 22. Juli 1997

## Beschreibung

Die Erfindung betrifft eine Ladebordwand für Ladebordwandsysteme zur Befestigung an Fahrzeugen, insbesondere Lastkraftfahrzeugen, umfassend jeweils ein im wesentlichen parallelogrammförmiges, aus zwei im wesentlichen parallel voneinander beabstandeten Tragwerken bestehendes Hub- und/oder Klapptragwerk, an dem die im wesentlichen plattenförmige Ladebordwand zum Heben und Absenken einer Last und ggf. zum Verschließen eines Stauraumes des Fahrzeugs über ein an der Ladebordwand über ein die Ladebordwand stützendes Stützelement befestigtes Augenelement drehbar befestigt ist, und eine Hubaktuatoreinrichtung zum Heben und Senken der Ladebordwand sowie ggf. eine Klappaktuatoreinrichtung zum Verschwenken der Ladebordwand von der Horizontalen in die Vertikale und umgekehrt, wobei das Stützelement aus einem Fe-Werkstoff oder einer Fe-Werkstofflegierung besteht.

Eine Ladebordwand eines Ladebordwandsystems dieser Art ist bekannt (EP-A-0 081 115). Dort ist eine Ladeplattform beschrieben, die insgesamt aus einem metallischen Werkstoff besteht, oder alternativ aus Kunststoffwerkstoff. Dann, wenn die Ladeplattform aus metallischem Werkstoff besteht, kann ein U-profilförmiges Anschlußelement mit der Ladeplattform verschweißt werden, wobei die Ladeplattform aus einem Fe-Werkstoff besteht und das besagte Anschlußprofil ebenfalls.

Wenn die dortige plattenförmige Ladebordwand aus einem Kunststoffwerkstoff besteht, wird das U-profilförmige Anschlußprofil mit der aus Kunststoff bestehenden Ladebordwand über Schrauben befestigt. Diese bekannten Methoden dienen der Vereinfachung der Konstruktion.

Ladebordwandsysteme, beispielsweise gemäß der EP-A-0 808 747, finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf der das Lastkraftfahrzeug steht, absenken zu können, so daß die Last dann anderweitig zum Bestimmungsort verbracht werden kann. Das gleiche gilt für den Beladungsvorgang eines Lastkraftfahrzeuges, d.h. die Last wird auf die sich auf der Fahrbahnebene befindliche Ladebordwand aufgebracht, die Ladebordwand wird auf die Höhe der Ladeplattform des Lastkraftfahrzeuges angehoben und nachfolgend auf die Ladeplattform verbracht. Ist der Ent- bzw. Beladevorgang beendet, wird bei einigen Ladebordwandsystemen die Ladebordwand aus der Horizontalen, in der sie sich zum Be- und Entladen befand, in die Vertikale verschwenkt, so daß die Ladebordwand als rückwärtiger Abschluß der Ladefläche bzw. eines kofferartig ausgestalteten Laderaums dienen kann, bei anderen Ladebordwandsystemen wird die Ladebordwand gefaltet bzw. zusammengeklappt und an geeigneter Stelle unter die Ladefläche des Lastkraftfahrzeuges verbracht bzw. verschwenkt.

Für das Heben und Senken der Ladebordwand in im wesentlichen horizontaler Ausrichtung für den Be- und Entladevorgang von der Ebene der Ladefläche eines Lastkraftfahrzeuges auf die Fahrbahn und von der Fahrbahn auf die Ebene der Ladefläche wird eine sogenannte Hubaktuatoreinrichtung verwendet, die hydraulisch, pneumatisch, elektrisch oder aus Kombinationen derartiger Mittel betrieben wird. Für das Verschwenken der Ladebordwand, für das Öffnen und Schließen des eigentlichen Laderaumes aus der Horizontalen in die Vertikale und umgekehrt, wird eine Klappaktuatoreinrichtung verwendet, die ebenfalls auf voraufgeführte Weise betrieben werden kann. Ladebordwandsysteme der vorbeschriebenen Art können somit zumindest eine Aktuatoreinrichtung aufweisen, die zumindest mit einem Tragwerk des parallelogrammförmigen Hub- oder Klapptragwerkes zusammenwirkt. Sind sowohl wenigstens eine Hubaktuatoreinrichtung vorhanden und wenigstens eine Klappaktuatoreinrichtung, so arbeitet die Hubaktuatoreinrichtung mit dem einen Tragwerk des parallelogrammförmigen Hub- und Klapptragwerks zusammen, wohingegen die Klappaktuatoreinrichtung mit dem anderen Tragwerk des Hub- und Klapptragwerkes zusammenwirkt.

Die eigentliche Ladebordwand des Ladebordwandsystems, auf der die Last vertikal nach oben bzw. nach unten bewegt wird, und die ggf. auch zum Verschließen der Ladefläche dienen kann, ist, wie aus dem vorangehend Geschilderten ersichtlich, während des Hub- bzw. Senkbetriebes sehr großen Kräften, insbesondere auch Hebelkräften, ausgesetzt, die in das Hub-/Klapptragwerk bzw. das Tragwerk insgesamt eingeleitet werden müssen.

Aus diesem Grunde muß die Ladebordwand selbst auch eine sehr große Eigenstabilität aufweisen, d.h. sie darf sich lediglich auch bei der Manipulation von Maximallasten nur gering elastisch verformen. Darüber hinaus muß die Konstruktion der Ladebordwand so gewählt sein, daß sie selbst eine geringe Dickenausdehnung aufweist, um auf einfache Weise zu ermöglichen, daß die Ladeplattform, wenn sie beispielsweise auf dem Fahrbahngrund steht, nicht eine zusätzlich Rampe benötigt, damit die mit der Ladeplattform auf die Ebene der Ladeplattform eines Fahrzeuges zu hebende Last darauf leicht heraufgeschoben bzw. generell darauf leicht verbracht werden kann. Aus diesem Grunde weisen die Ladeplattformen eine verhältnismäßig geringe vertikale Dicke im Vergleich zu ihrer Flächenausdehnung auf und sind regelmäßig mit einem oberen plattenförmigen Ladebordwandelement und einem unteren plattenförmigen Ladebordwandelement versehen. Der Aufbau derartiger Ladebordwandsysteme ist der Fachwelt generell bekannt.

Im Stand der Technik sind auch verschiedene Anschlußelemente bekannt, mit denen diese Ladebordwand an sich bekannter Bauart mit den Tragwerken des Ladebordwandsystems verbunden werden kann. Im allgemeinen wird die Ladebordwand, wie eingangs schon angedeutet, über ein an der Ladebordwand befestigtes Stützelement am Tragwerk bzw. den Tragwerken des Ladebordwandsystems befestigt, und zwar derart, daß das Stützelement selbst wieder an einem Augenelement bzw. Augenelementen befestigt ist, die selbst wiederum drehbar an dem Tragwerk bzw. den Tragwerken des Ladebordwandsystems befestigt sind.

Es versteht sich von selbst, daß insbesondere das Stützelement und das Augenelement aufgrund ihrer einseitigen Befestigung an der Ladebordwand den größten Kräften, die auf die Ladebordwand ausgeübt werden, ausgesetzt sind, da insbesondere in diesen Bereichen die Hebelwirkung am größten ist.

Ein wesentliches Problem bei Ladebordwänden für Ladebordwandsysteme dieser Art ist das Gewicht. Die Betreiber von Fahrzeugen, bei denen Ladebordwandsysteme verwendet werden, haben ein großes Interesse daran, daß das Ladebordwandsystem bzw. auch die zum System gehörende Ladebordwand selbst ein geringes Gewicht aufweist bzw. aufweisen, da das Ladebordwandsystem natürlich fortwährend zwar ggf. lösbar aber normalerweise fest am Fahrzeug angebracht ist. Es wird also fortwährend ein großes Gewicht, das das Ladebordwandsystem insgesamt bildet, zwangsweise vom Fahrzeug befördert. Um das den Kraftstoffverbrauch des Fahrzeuges und den Verschleiß des Fahrzeuges ungünstig beeinflussende hohe Gewicht des Ladebordwandsystems bei zu gewährleistender hoher Festigkeit für den bestimmungsgemäßen Betrieb zu gewährleisten, ist das bisherige Stützelement, das die Ladebordwand über das Augenelement mit dem Tragwerk des Ladebordwandsystems verbindet, in der Regel aus geeignet und speziell geformten Stranggußprofilen aus Aluminium bzw. geeignet gewählten Aluminiumlegierungen hergestellt.

Da es sich bei diesem Stützelement um ein verhältnismä-Big kompliziertes Teil handelt, das nämlich einerseits einen kraftflüssigen Anschluß der Ladebordwand an das Stützelement gewährleisten muß und andererseits auch das auf die Ladebordwand wirkende maximale Drehmoment zerstörungsfrei aufzunehmen imstande sein muß, ist das Stützelement selbst verhältnismäßig kompliziert geformt und regelmäßig als Strangpreßprofil ausgebildet. Derartige speziell geformte Strangpreßprofile aus Aluminium bzw. Aluminiumlegierungen sind extrem kostenträchtig und zeigen trotz aller stabilitätsvergrößernden, profilverbessernden Maßnahmen bei ungewollter Überlastung ein nicht akzeptables Bruchverhalten, was bisweilen auch schon bei normaler Beanspruchung auftritt.

Die Folge eines Bruchs des Stützelementes ist, daß die Ladebordwand selbst nicht mehr brauchbar ist und ggf. auch unmittelbar darauf nicht einmal mehr vertikal anhebbar oder absenkbar ist, was ggf. auch für das Verschwenken aus der Horizontalen in die Vertikale und umgekehrt gilt, so daß das Fahrzeug mit einer derartigen defekten Ladebordwand unmittelbar vor Ort des Bruchs bzw. der Beschädigung repariert werden muß.

Ein anderer Nachteil der bisherigen Ladebordwand mit dem stranggepreßten Stützelement besteht im wesentlichen darin, daß auch die Befestigung des Stützelements mit dem Augenelement konstruktiv aufwendig ist, da das Stützelement aus dem stranggepreßten Aluminium bzw. Aluminiumlegierungsprofil mittels Bolzen befestigt ist bzw. sind, die selbst wieder hohe Biegemomente im Bereich der Bolzenbefestigung am Stützelement auf das Stützelement ausüben.

Es ist somit Aufgabe der vorliegenden Erfindung, eine Ladebordwand der eingangs genannten Art zu schaffen, die sehr viel preisgünstiger herstellbar ist als bekannte Ladebordwände, die in der Lage ist, zerstörungsfrei höhere Dreh- und Biegemomente, die auf die Ladebordwand bzw. von dieser ausgeübt werden, aufzunehmen, die einfacher herstellbar als bekannte Ladebordwände ist und keine speziell angefertigten Stützelemente benötigt und die in bezug auf das Erfordernis eines gering zu haltenden Gewichts im wesentlichen nicht über das Gewicht konventioneller Ladebordwände hinausgeht.

Gelöst wird die Aufgabe gemäß der Erfindung dadurch, daß das Stützelement im Querschnitt in Form eines Rohres ausgebildet ist.

Der Vorteil der erfindungsgemäßen Lösung besteht im wesentlichen darin, daß faktisch das Stützelement aus einer geeignet gebogenen Eisen- oder Stahlplatte bestehen kann, die lediglich derart in bezug auf den das Eisen oder den Stahl bzw. die Eisen- oder Stahllegierung bildenden Werkstoff an die zu erwartenden Belastungen angepaßt zu werden braucht. Dieses gilt auch für die Dicke des für die Ausbildung des erfindungsgemäßen Stützelements beispielsweise heranzuziehenden Eisen- bzw. Eisenlegierungs- bzw. Stahl- bzw. Stahllegierunghalbzeugs. Es werden beispielsweise durch die erfindungsgemäße Ausgestaltung des Stützelements eine bis zu 30 % und mehr gehende Verminderung der Gestehungskosten für eine Ladebordwand erwartet. Zudem ist das erfindungsgemäß ausgestaltete Stützelement nicht nur selbst kostengünstiger in bezug auf die Formgestaltung des Stützelements herstellbar, vielmehr ist auch das zur Ausgestaltung des Stützelements heranzuziehende blechförmige Halbzeug preisgünstiger bereitstellbar als das speziell herzustellende Aluminiumstranggußprofil.

Ein weiterer wesentlicher Vorteil gegenüber der bekannten Ladebordwand ist der, das das erfindungsgemäß Stützelement auch eine sehr viel höhere Stabilität bei annähernd gleichbleibendem Gewicht gegenüber den bisherigen Stützelementen aufweist.

Das Augenelement bzw. die Augenelemente, über das die bzw. die die Ladebordwand unmittelbar an den Tragwerken des Ladebordwandsystems drehbar befestigt wird bzw. werden, bestehen bei im Stand der Technik bekannten Ausgestaltungen aus gesonderten Elementen aus Fe-Werkstoffen bzw. Fe-Werkstofflegierungen. Unter Berücksichtigung der erfindungsgemäßen Lösung, Stützelemente aus Fe-Werkstoffen oder Fe-Werkstofflegierungen auszubilden, ist es vorteilhaft, das Stützelement und das Augenelement einstückig miteinander auszubilden.

Bei einer anderen vorteilhaften Ausgestaltung des Ladebordwandsystems weist das Stützelement ein die Oberfläche der Ladebordwand verlängerndes, im wesentlichen gerade geformtes Teil und ein unter die Oberfläche der Ladebordwand greifendes, im wesentlichen prismatisch geformtes Teil auf. Bei im Stand der Technik bekannten Ladebordwänden ist das verlängerte Teil Teil der Ladebordwand selbst und liegt auf dem im Stand der Technik bekannten Stützteil aus stranggepreßtem Aluminiumprofil auf. Durch die erfindungsgemäß vorgeschlagene vorteilhafte Ausgestaltung der Ladebordwand entfällt die Notwendigkeit eines flächigen, kraftschlüssigen Aufliegens des verlängerten Teils auf dem Stützelement, was erfindungsgemäß zu einfacheren und stabileren Konstruktionen auch der Ladebordwand führt und zudem die Ladebordwand leichter vom Stützelement zu entfernen bzw. an diesem wiederum zu befestigen gestattet.

Um die Stützfestigkeit einerseits und die Gesamtformstabilität andererseits des Stützelements zu verbessern, weist bei einer anderen vorteilhaften Ausgestaltung der Ladebordwand das prismatisch geformte Teil einen im wesentlichen gerade geformten Steg auf, der an der Unterfläche der Ladebordwand anliegt. Die Formstabilität und damit die Laststabilität des prismatischen Teils des Stützelementes wird dadurch erheblich verbessert, insbesondere dann, wenn bei einer weiteren Abwandlung der Erfindung vorzugsweise das prismatisch getrennte Teil und der gerade geformte Steg im Querschnitt ein Dreieck bilden.

Faktisch kann für das prismatisch im Querschnitt geformte Teil des Stützelements ein im Handel erhältliches, im Querschnitt dreieckförmiges Standard-Halbzeug bzw. Standard-Halbzeugrohr verwendet werden, an dem die übrigen Teile des Stützelements angeschweißt oder sonstwie verbunden sind. Vorteilhaft ist es aber, das prismatisch geformte Teil mit den übrigen Teilen des Stützelements einstückig aus einem aus als Halbzeug zur Verfügung stehenden Blechelement zu formen und das prismatisch geformte Teil und den geraden Steg mittels Schweißung miteinander zu verbinden.

Die Ladebordwand selbst ist vorteilhafterweise mit dem Stützelement wenigstens an ihrer dem Stützelement zugewandten Stirnseite über lösbare Verbindungsmittel befestigt, was gegenüber den bisher im Stand der Technik bekannten Konstruktionen der Verbindung zwischen Stützelement und Ladebordwand zu sehr viel einfacheren Befestigungskonstruktionen führt.

Schließlich ist vorzugsweise die Stirnwand der Ladebordwand mit einem U-profilförmigen Stirnelement versehen, in dessen Innenraum Gleitmuttern aufnehmbar sind, die mit Bolzen zur Befestigung der Ladebordwand an Stützelementen zusammenwirken. Auch durch diese Maßnahme wird eine gegenüber den bisher im Stand der Technik bekannten Konstruktionen einfache, lösbare Verbindung zwischen Stützelement und Ladebordwand geschaffen.

Die Ladebordwand selbst ist auch bei im Stand der Technik bekannten unterschiedlichen Ladebordwandsystemen an sich plattenförmig ausgebildet, wobei diese vorzugsweise ein oberes Flächenteil aufweist, das eine Oberfläche bildet, auf der die zu transportierende Ware zu liegen kommt, und ein unteres Flächenteil mit einer unteren Unterfläche, wobei das obere und das untere Flächenteil im wesentlichen parallel zueinander beabstandet sind. Es sind grundsätzlich aber auch Ausgestaltungen von Ladebordwänden möglich, die nur ein oberes Flächenteil aufweisen, das durch ein entsprechendes strukturiertes bzw. profiliertes Tragwerk stabilisiert wird.

Die Ladebordwände bestehen vorzugsweise wenigstens teilweise aus Aluminium oder einer Aluminiumlegierung, unabhängig davon, ob die Ladewände nur ein oberes Flächenteil oder sowohl ein oberes als auch unteres Flächenteil aufweisen. Dieses gilt gleichermaßen für den Fall, wo die Ladebordwand vorzugsweise aus einem Fe-Werkstoff oder einer Fe-Werkstofflegierung besteht oder vorteilhafterweise bei einer anderen Ausführung der Ladebordwand, wo diese wenigstens teilweise aus Kunststoff oder einem Kunstharz besteht, welcher bzw. welches auch vorteilhafterweise mit Verstärkungsmitteln versehen sein kann, wie beispielsweise Glas- oder Kohlefasern.

Besteht wenigstens das untere Flächenteil der Ladebordwand aus einem Fe-Werkstoff oder einer Fe-Werkstofflegierung, kann das Stützelement gemäß der Erfindung beispielsweise an der Ladebordwand selbst durch Schweißen verbunden werden, was zu einer sehr einfachen Ausgestaltung der Erfindung führt.

Schließlich ist es möglich, die Ladebordwand wenigstens teilweise aus einem Verbundwerkstoff auszubilden, bei dem verschiedenen Werkstoffe und Werkstofflegierungen bzw.- gemische herangezogen werden können. So ist es beispielweise möglich, sogenannte Sandwich-Konstruktionen zu verwenden, die einerseits eine extrem hohe Festigkeit der flächenförmigen Ladebordwand sicherstellen und andererseits ein sehr geringes Eigengewicht aufweisen.

Die Erfindung wird nun unter Bezugnahme auf die nachfolgenden schematischen Zeichnungen anhand eines Ausführungsbeispieles eingehend beschrieben. Darin zeigen:
- Fig. 1: im Schnitt in einer Teilansicht den Anschlußbereich einer Ladebordwand an ein Stützelement, welches wiederum mit einem Augenelement verbunden ist, gemäß einer im Stand der Technik bekannten Ausgestaltung,
- Fig. 2: eine Ladebordwand gemäß der Erfindung in einer Ansicht entsprechend Fig. 1,
- Fig. 3: eine Ansicht auf eine Ladebordwand von unten und
- Fig. 4: 'eine Seitenansicht der in Fig. 3 dargestellten Ladebordwand.

Eine Ladebordwand 10 für Ladebordwandsysteme zur Befestigung an Fahrzeugen ist beispielhaft eingehend beschrieben in der EP-B-0 808 747 beschrieben, insbesondere der Aufbau der Tragwerke, der Hub- und/oder Klapptragwerke sowie der Hubaktuatoreinrichtung und der ggf. vorzusehenden Klappaktuatoreinrichtung. Insofern wird hier bezüglich des Verständnisses des Aufbaus derartiger Ladebordwandsysteme mit Ladebordwand auf diesen Stand der Technik verwiesen.

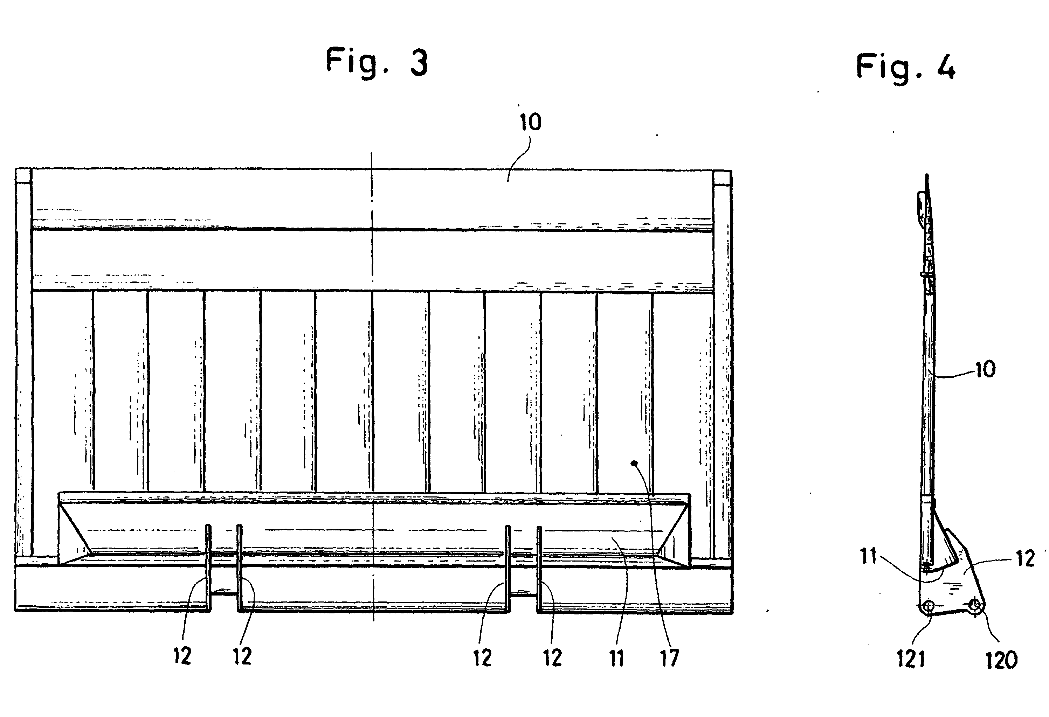

Diese Ladebordwandsysteme weisen eine Ladebordwand 10 auf, die im wesentlichen plattenförmig ausgebildet ist, vergleiche insbesondere die Fig. 3 und 4, wobei der Aufbau der Ladebordwand 10 als solcher ebenfalls im Stand der Technik bekannt ist und hier deshalb auf ein weiteres, detailliertes Eingehen auf den Aufbau der Ladebordwand 10 verzichtet werden kann. Eine Ladebordwand 10 weist normalerweise ein oberes Flächenteil mit einer Oberfläche 13 und ein unteres Flächenteil mit einer Unterfläche 14 auf, die im wesentlichen parallel zueinander beabstandet sind, vergleiche auch Fig. 4.

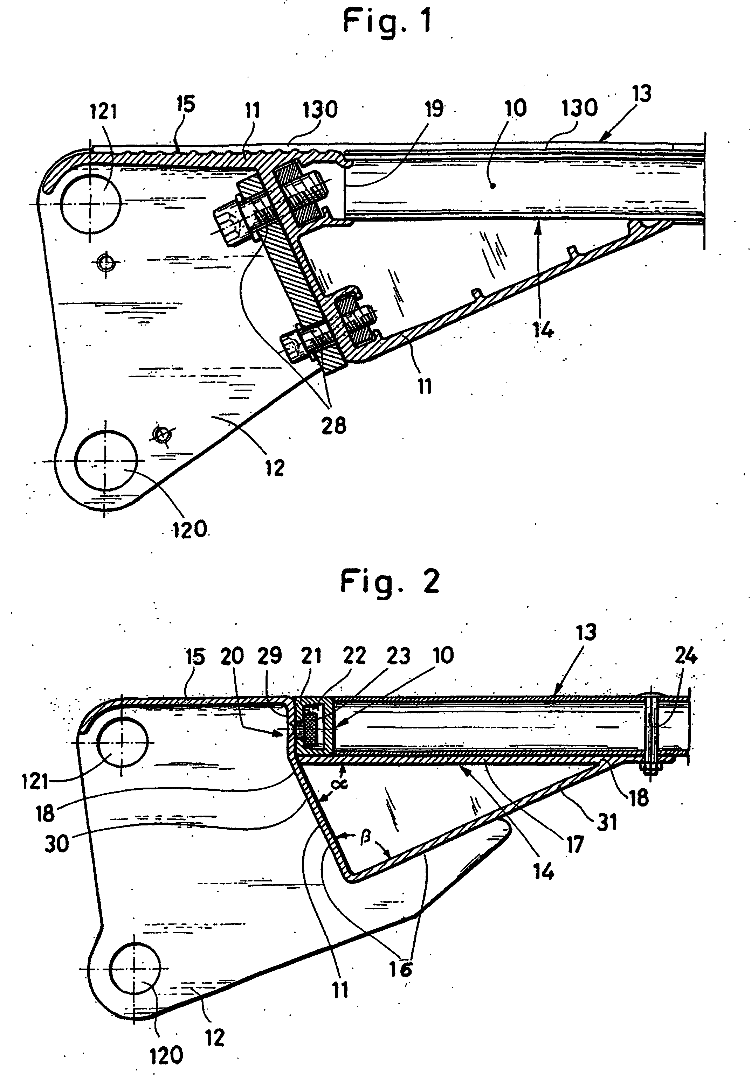

Bei der in Fig. 1 dargestellten Ladebordwand 10, die eine im Stand der Technik bekannte Ausgestaltung zeigt, ist ein Stützelement 11 vorgesehen, das aus einem geeignet geformten Stranggußprofil aus einer Spezialaluminiumlegierung besteht. Das Stützelement 11 weist ein verlängertes, gerades Teil 15 auf, das parallel zur Oberfläche 13 der Ladebordwand 10 ausgebildet ist, so daß das obere Teil der Ladebordwand 10 mit seinem oberen abdeckenden Oberflächenelement 130 auf dem geraden Teil 15 aufliegt. Ein unteres, schenkelförmiges Teil des Stützelements 11 liegt an der Unterfläche 14 der Ladebordwand 10 an. Gesonderte Stege im Stützelement 11 der bisher bekannten Art stützen die Stirnseite 19 der Ladebordwand 10 ab. Über Schraubverbindungsmittel 28 wird das Stützelement 11 am Augenelement 12 befestigt.

Die in Fig. 2 dargestellte erfindungsgemäße Ladebordwand 10 weist ein Stützelement 11 auf, das im Querschnitt ein im wesentlichen gerade geformtes Teil 15 aufweist, und einen dazu rechteckig verlaufenden Steg 29, der an die Stirnseite 19 der Ladebordwand 10 angrenzt. Das gerade Teil 15 liegt mit seiner oberen Oberfläche in der gleichen Ebene wie der der Oberfläche 13 der Ladebordwand 10. Der Steg 29 geht in ein im wesentlichen prismatisch geformtes Teil 16, das mit seinem freien Schenkel 31 unter die Oberfläche 13 der Ladebordwand 10 greift, über. Der unmittelbar an den Steg 29 angrenzende Schenkel 31 des Stützelements 11 ist im Bereich der Unterfläche 14 der Ladebordwand 10 gegenüber der Unterfläche 14 um einen Winkel « abgeknickt, wobei Winkel α < 90° ist. Der Winkel β zwischen den Schenkeln 30 und 31 des prismatisch geformten Teils 16 des Stützelements 11 ist hier ca. 90° groß. Die dem Winkel β abgewandten Enden der Schenkel 30, 31 sind mittels eines gesonderten Stegs bzw. Stegelementes 17 miteinander verbunden, so daß das Stützelement 11 an dieser Stelle quasi durch einen im Querschnitt dreieckförmigen Hohlkörper gebildet wird. Die Verbindungen der Schenkel 30, 31 mit dem Steg 17 sind beispielsweise mittels einer Schweißverbindung 18 hergestellt.

Die erfindungsgemäß sehr einfache, aber sehr effektive Konstruktion des Stützelements aus einem Fe-Werkstoff oder einer Fe-Werkstofflegierung wird mit der Ladebordwand 10 über ein an der Stirnseite 19 der Ladebordwand 10 vorgesehenes, im Querschnitt U-profilförmiges Stirnelement 20 verbunden. Das U-profilförmige Stirnelement 20 ist kraft- und formschlüssig mit der Ladebordwand 10 verbunden. Im Innenraum 21 des U-profilförmigen Stirnelements 20 sind eine Mehrzahl von Gleitmuttern 22 vorgesehen, die an eine geeignete Stelle im Innenraum 21 derart positioniert werden können, daß sie mit entsprechenden Löchern bzw. Bohrungen im Steg 29 des Stützelements 11 übereinstimmen, so daß dort Vebindungsmittel, beispielsweise in Form von Gewindebolzen, eingesetzt werden können, die mit den Gleitmuttern 22 zusammenwirken und somit die Ausführung einer einfach lösbaren, festen Verbindung zwischen Ladebordwand 10 und Stützelement 11 ermöglichen. Zusätzlich kann das freie Ende des Schenkels 31 des prismatisch geformten Teils 16 des Stützelements 11 geeignet abgewinkelt mittels eines weiteren Verbindungsmittels 24, in Fig. 2 als Bolzen-Mutterverbindung dargestellt, als zusätzliche Verbindung zwischen Stützelement 11 und Ladebordwand 10 ausgeführt werden.

Abweichend von der Ausgestaltung der Ladeplattform, wie sie gemäß Fig. 1 im Stand der Technik bekannt ist, kann das Augenelement 12, das Teil der Ladebordwand 10 ist, vergleiche auch die Fig. 2,3 und 4, derart ausgestaltet sein, daß es unter den Steg 31 des Stützelementes 11 greift, so daß eine erhöhte Stabilität der Verbindung zwischen Stützelement 11 und Augenelement 12 erreicht wird, was letztlich auch zu einer wesentlichen Verbesserung der Einleitungsfähigkeit einer auf die Ladebordwand 10 durch eine damit zu handhabende Last in das Augenelement und in die Tragwerke des Ladebordwandsystems dient, wobei das Stützelement 11 in bezug auf Verformungskräfte, bedingt durch die Last auf der Ladebordwand 10 zusätzlich, entlastet wird.

Wie auch aus den Fig. 1 und 2 ersichtlich ist, kann das Stützelement 11 gemäß der Erfindung, vergleiche Fig. 2, faktisch aus einem Stück aus Blech, das als Ausgangshalbzeug herangezogen wird, hergestellt werden, wobei anstelle der Schweißverbindung 18 unmittelbar im Nachbarbereich des dort gezeigten Verbindungsmittels 24 der Schenkel 31 auch umgebogen werden kann und somit als verlängerter Schenkel 31 den Steg 17 bilden kann, wobei in dem Falle lediglich im Bereich des Stirnelements 21 Schenkel 31 bzw. Steg 17 mit dem Schenkel 30 verschweißt zu werden braucht. In diesem Falle würde dann der Teil des Schenkels 31, der gemäß Fig. 2 parallel zur Unterfläche 14 der Ladebordwand 10 abgekantet ist, als gesondertes Teil angeschweißt oder sonstwie geeignet mit dem Schenkel 31 verbunden werden.

Faktisch wäre es auch möglich, das Stützelement 11 und das Augenelement 12 in Form eines geeignet gebogenen Formteils einstückig auszubilden.

### Bezugszeichenliste

- 10: Ladebordwand
- 11: Stützelement
- 12: Augenelement
- 13: Oberfläche (Ladebordwand)
- 130: Oberflächenelement
- 14: Unterfläche (Ladebordwand)
- 15: gerades, verlängertes Teil
- 16: prismatisch geformtes Teil
- 17: Steg
- 18: Schweißverbindung
- 19: Stirnseite (Ladebordwand)
- 20: Verbindungsmittel
- 21: Stirnelement
- 22: Innenraum
- 23: Gleitmutter
- 24: Verbindungsmittel
- 25 26 27 28: Schraubverbindung
- 29: Steg
- 30: Schenkel
- 31: Schenkel

## Patentansprüche

1. Ladebordwand (10) für Ladebordwandsysteme zur Befestigung an Fahrzeugen, insbesondere Lastkraftfahrzeugen, umfassend jeweils ein im wesentlichen parallelogrammförmiges, aus zwei im wesentlich parallel voneinander beabstandeten Tragwerken bestehendes Hub- und/oder Klapptragwerk, an dem die im wesentlichen plattenförmige Ladebordwand (10) zum Heben und Absenken einer Last und ggf. zum Verschließen eines Stauraumes des Fahrzeuges über ein an der Ladebordwand über ein die Ladebordwand stützendes Stützelement (11) befestigtes Augenelement (12) drehbar befestigt ist, und eine Hubaktuatoreinrichtung zum Heben und Senken der Ladebordwand (10) sowie ggf. eine Klappaktuatoreinrichtung zum Verschwenken der Ladebordwand (10) von der Horizontalen in die Vertikale und umgekehrt, wobei das Stützelement (11) aus einem Fe-Werkstoff oder einer Fe-Werkstofflegierung besteht, **dadurch gekennzeichnet, daß** das Stützelement (11) im Querschnitt in Form eines Rohres ausgebildet ist.

2. Ladebordwand nach Anspruch 1, **dadurch gekennzeichnet, daß** das Stützelement (11) und das Augenelement (12) einstückig miteinander ausgebildet sind.

3. Ladebordwand nach einem oder beiden der Ansprüche 1 oder 2, **dadurch gekennzeichnet, daß** das Stützelement (11) im Querschnitt ein die Oberfläche (13) der Ladebordwand (10) verlängerndes, im wesentlichen gerade geformtes Teil (15) und ein unter die Unterfläche (14) der Ladebordwand (10) greifendes, im wesentlichen prismatisch geformtes Teil (16) aufweist.

4. Ladebordwand nach Anspruch 3, **dadurch gekennzeichnet, daß** das prismatisch geformte Teil (13) einen im wesentlichen gerade geformten Steg (17) aufweist, der an der Unterfläche (14) der Ladebordwand (10) anliegt.

5. Ladebordwand nach einem oder beiden der Ansprüche 3 oder 4, **dadurch gekennzeichnet, daß** das prismatisch geformte Teil (16) und der gerade geformte Steg (17) ein Dreieck bilden.

6. Ladebordwand nach einem oder mehreren der Ansprüche 3 bis 5, **dadurch gekennzeichnet, daß** das prismatisch geformte Teil (16) und der gerade geformte Steg (17) mittels Schweißung (18) miteinander verbunden sind.

7. Ladebordwand nach einem oder mehreren der Ansprüche 1 bis 6, **dadurch gekennzeichnet, daß** diese (10) mit dem Stützelement (11) wenigstens an ihrer dem Stützelement (11) zugewandten Stirnseite (19) über Verbindungsmittel (20) befestigt ist.

8. Ladebordwand nach Anspruch 7, **dadurch gekennzeichnet, daß** die Stirnseite (19) der Ladebordwand (10) mit einem U-profilförmigen Stirnelement (21) versehen ist, in dessen Innenraum (22) Gleitmuttern (23) aufnehmbar sind, die mit Bolzen zur Befestigung der Ladebordwand (10) am Stützelement (11) zusammenwirken.

9. Ladebordwand nach einem oder mehreren der Ansprüche 1 bis 8, **dadurch gekennzeichnet, daß** diese ein oberes Flächenteil (13) und ein unteres Flächenteil (14) aufweist.

10. Ladebordwand nach einem oder mehreren der Ansprüche 1 bis 9, **dadurch gekennzeichnet, daß** diese wenigstens teilweise aus Aluminium oder einer Aluminiumlegierung besteht.

11. Ladebordwand nach einem oder mehreren der Ansprüche 1 bis 9, **dadurch gekennzeichnet, daß** diese wenigstens teilweise aus einem Fe-Werkstoff oder einer Fe-Werkstofflegierung besteht.

12. Ladebordwand nach einem oder mehreren der Ansprüche 1 bis 9, **dadurch gekennzeichnet, daß** diese wenigstens teilweise aus Kunststoff oder einem Kunstharz besteht.

13. Ladebordwand nach einem oder mehreren der Ansprüche 1 bis 9, **dadurch gekennzeichnet, daß** diese wenigstens teilweise aus einem Verbundwerkstoff besteht.

## Claims

1. Loading platform(10) for loading tailgate systems for attaching to vehicles, in particular trucks, comprising respectively a lifting and/or closing support frame in a substantially parallelogram configuration, consisting of two parallel supporting frames spaced at a distance apart from one another, to which the substantially board-shaped loading platform (10) for raising and lowering a load and optionally for closing off a cargo compartment of the vehicle is pivotably attached by means of an eye element (12) fixed to the loading platform by a support element (11) supporting the loading platform and a lifting cylinder mechanism for raising and lowering the loading platform (10) and optionally a closing cylinder mechanism for swinging the loading platform (10) from a horizontal into a vertical position and vice versa, the support element (11) being made from a Fe material or a Fe alloy, **characterised in that** the support element (11) has the shape of a tube in cross-section.

2. Loading platform as claimed in claim 1, **characterised in that** the support element (11) and the eye element (12) are made integrally in one piece.

3. Loading platform as claimed in one or both of claims 1 or 2, **characterised in that** the support element (11) the support element has a part (15) with a substantially straight shape extending the top face (13) of the loading platform (10) and a part (16) of a substantially prismatic shape fitting underneath the bottom face (14) of the loading platform (10)

4. Loading platform as claimed in claim 3, **characterised in that** the prismatically shaped part (13) has a web (17) with a substantially straight shape, which lies against the bottom face (14) of the loading platform (10).

5. Loading platform as claimed in one or both of claims 3 or 4, **characterised in that** the prismatically shaped part (16) and the straight shaped web (17) form a triangle.

6. Loading platform as claimed in one or more of claims 3 to 5, **characterised in that** the prismatically shaped part (16) and the straight shaped web (17) are joined to one another by a welded joint (18).

7. Loading platform as claimed in one or more of claims 1 to 6, **characterised in that** it (10) is fixed to the support element (11) at least by its terminal side (19) directed towards the support element (11) by connecting means (20).

8. Loading platform as claimed in claim 7, **characterised in that** the terminal side (19) of the loading platform (10) is provided with a terminal element (21) of a U-shaped section, in the interior (22) of which sliding nuts (23) can be received, which co-operate with bolts in order to fix the loading platform (10) to the support element (11).

9. Loading platform as claimed in one or more of claims 1 to 8, **characterised in that** it has a top flat part (13) and a bottom flat part (14).

10. Loading platform as claimed in one or more of claims 1 to 9, **characterised in that** it is at least partially made from aluminium or an aluminium alloy.

11. Loading platform as claimed in one or more of claims 1 to 9, **characterised in that** it is at least partially made from a Fe material or a Fe alloy.

12. Loading platform as claimed in one or more of claims 1 to 9, **characterised in that** it is at least partially made from a plastics material or a synthetic resin.

13. Loading platform as claimed in one or more of claims 1 to 9, **characterised in that** it is at least partially made from a composite material.

## Revendications

1. Hayon élévateur (10) pour des systèmes de hayon élévateur à fixer sur des véhicules, en particulier des camions, comprenant respectivement une structure portante élévatrice et/ou basculante sensiblement en forme de parallélogramme, composée de deux structures portantes espacées l'une de l'autre de manière sensiblement parallèle, sur laquelle le hayon élévateur (10) sensiblement en forme de plaque est fixé de manière à pouvoir pivoter, pour lever et baisser une charge et le cas échéant pour fermer un espace de retenue du véhicule, par l'intermédiaire d'un élément d'oeillet (12) fixé sur le hayon élévateur par l'intermédiaire d'un élément de support (11) supportant le hayon, et un dispositif d'actionnement de l'élévation pour soulever et baisser le hayon élévateur (10) ainsi que, le cas échéant, un dispositif d'actionnement du basculement pour faire pivoter le hayon élévateur (10) de la position horizontale à la position verticale et inversement, moyennant quoi l'élément de support (11) est composé d'un matériau ferreux ou d'un alliage de matériau ferreux, **caractérisé en ce que** l'élément de support (11) est conçu en section transversale sous la forme d'un tube.

2. Hayon élévateur selon la revendication 1, **caractérisé en ce que** l'élément de support (11) et l'élément d'oeillet (12) sont conçus l'un avec l'autre en une seule pièce.

3. Hayon élévateur selon l'une quelconque ou les deux des revendications 1 ou 2, **caractérisé en ce que** l'élément de support (11) présente en section transversale une pièce (15) sensiblement rectiligne, prolongeant la surface supérieure (13) du hayon élévateur (10) et une pièce (16) sensiblement prismatique, saisissant sous la surface inférieure (14) du hayon élévateur (10).

4. Hayon élévateur selon la revendication 3, **caractérisé en ce que** la pièce (13) prismatique présente une nervure (17) sensiblement rectiligne, qui est adjacente à la surface inférieure (14) du hayon élévateur (10).

5. Hayon élévateur selon l'une quelconque ou les deux des revendications 3 ou 4, **caractérisé en ce que** la pièce (16) prismatique et la nervure (17) rectiligne forment un triangle.

6. Hayon élévateur selon l'une quelconque ou plusieurs des revendications 3 à 5, **caractérisé en ce que** la pièce (16) prismatique et la nervure (17) rectiligne sont reliées l'une à l'autre au moyen d'une soudure (18).

7. Hayon élévateur selon l'une quelconque ou plusieurs des revendications 1 à 6, **caractérisé en ce que** celui-ci (10) comprenant l'élément de support (11) est fixé au moins sur son côté frontal (19) tourné vers l'élément de support (11) par l'intermédiaire de moyens de raccordement (20).

8. Hayon élévateur selon la revendication 7, **caractérisé en ce que** le côté frontal (19) du hayon élévateur (10) est doté d'un élément frontal (21) en U, dans l'espace intérieur (22) duquel peuvent être logés des écrous de glissement (23), qui coopèrent avec des boulons pour fixer le hayon élévateur (10) sur l'élément de support (11).

9. Hayon élévateur selon l'une quelconque ou plusieurs des revendications I à 8, **caractérisé en ce que** celui-ci présente une pièce superficielle (13) supérieure et une pièce superficielle (14) inférieure.

10. Hayon élévateur selon l'une quelconque ou plusieurs des revendications 1 à 9, **caractérisé en ce que** celui-ci est composé au moins en partie d'aluminium ou d'un alliage en aluminium.

11. Hayon élévateur selon l'une quelconque ou plusieurs des revendications 1 à 9, **caractérisé en ce que** celui-ci est composé au moins en partie d'un matériau ferreux ou d'un alliage de matériau ferreux.

12. Hayon élévateur selon l'une quelconque ou plusieurs des revendications 1 à 9, **caractérisé en ce que** celui-ci est composé an moins en partie de matière plastique ou d'une résine synthétique.

13. Hayon élévateur selon l'une quelconque ou plusieurs des revendications 1 à 9, **caractérisé en ce que** celui-ci est composé au moins en partie d'un matériau composite.
